# EUROPÄISCHE PATENTSCHRIFT

(11) **EP 1 286 759 B1**
(45) Veröffentlichungstag und Bekanntmachung des Hinweises auf die Patenterteilung: **29.10.2003**
(21) Anmeldenummer: 01943359.8
(22) Anmeldetag: 15.05.2001
(51) Int. Cl.: B01J 3/03

(54) **EXPLOSIONSSICHERE BEHÄLTER**
EXPLOSION-PROOF CONTAINER
CONTENANTS RESISTANTS A L'EXPLOSION

(30) Priorität: 02.06.2000 DE 10027461
(43) Veröffentlichungstag der Anmeldung: 05.03.2003
(73) Patentinhaber: GLATT GMBH, 79589 Binzen (DE)
(72) Erfinder: TONDAR, Matthias, 79688 Hausen i.W. (DE); REHM, Edgar, 79576 Weil am Rhein Märkt (DE); BOECHERER, Thomas, 79423 Heitersheim (DE)
(74) Vertreter: Maucher, Wolfgang, Dipl.-Ing.
(86) Internationale Anmeldenummer: EP0105485
(87) Internationale Veröffentlichungsnummer: WO01094840

(56) Entgegenhaltungen:
- DE-U- 29 705 574
- NL-C- 108 871
- US-A- 3 547 298
- US-A- 4 882 128

## Beschreibung

Die Erfindung betrifft Behälter, insbesondere Wirbelschichtbehälter mit einem Gehäuseoberteil und einem Gehäuseunterteil, wobei diese Gehäuseteile in einem ringförmigen Trennbereich lösbar miteinander verbunden sind und wobei in diesem Trennbereich eine Abdichtung vorgesehen ist.

Behälter für chemische Stoffe und Stoffgemische (staubförmig, Lösungsmittel oder deren Gemische oder hybride Gemische) sind beispielsweise Reaktoren oder Wirbelschichtbehälter. Bei vielen, insbesondere pulverförmigen, Stoffen und Gemischen, besteht bei Lagerung oder vor allem Verarbeitung die Gefahr von Explosionen, beispielsweise Staubexplosionen.

Einfache Standardreaktoren oder Behälter von für die Umwelt tolerierbaren Substanzgemischen sind lediglich darauf ausgelegt, einem Überdruck von beispielsweise 2 bar standzuhalten. Bei höherem Überdruck, z.B. bei einer Explosion, erfolgt über eine Öffnung an einer Art Sollbruchstelle (Explosionskanal) eine Druckentlastung, beispielsweise nach oben, schließlich etwa über das Dach eines Fabrikationsgebäudes.

Insbesondere bei pharmakologisch hochwirksamen Stoffen (beispielsweise Hormonen oder hormonähnlichen Substanzen, Cytostatika oder anderen gegen Krebs wirksamen Stoffen, wie Aromatasehemmern, wie Letrozol, oder Mikrotubuligiften, wie Taxol, Epothilon oder Discodermolid, und dergleichen, die schon im mg-Bereich hochwirksam sind) ist diese Art der Entlastung wegen der Gefahren einer Belastung der Umwelt nicht zulässig. Hier muss dafür gesorgt werden, dass das System auch im Falle einer Explosion geschlossen bleibt: Die Vorschriften, wie VDI 2263, verlangen, dass hier im Falle einer Explosion beispielsweise innerhalb eines geschlossenen Behälters, wie Reaktors, kein Austritt von Komponenten des Inhalts nach aussen (z.B. über Explosionskanäle) erfolgen kann. Eine Verformung des Behälters ist hingegen zulässig.

Bei den somit notwendigen geschlossenen Systemen ist es erforderlich, daß Drücken von 10 und mehr (beispielsweise 12) bar standgehalten werden muss - derartige Explosionsdrucke finden sich bei den meisten der gängigen partikulären Stoffe (insbesondere Stäube) in der Pharmaindustrie.

Bei Wirbelschichtbehältern beispielsweise wird versucht, dem zu begegnen, indem man die verhältnismäßig grossen Behältnisse relativ dickwandig ausführt und Ausgänge erforderlichenfalls mit Schnellschliesseinrichtungen (beispielsweise wie in DE 31 37 116 beschrieben) versieht, die im Falle einer Explosion den Behälter abdichten, während der Explosionsdruck durch die (relativ dickwandigen und damit zu hohen Gewichten führenden) Behälterwandungen aufgefangen werden muss, was über deren Verformung geschieht.

Bei einem üblichen Aufbau eines Wirbelschichtbehälters liegt eine starre Befestigung des Oberteils vor, während die Lagerung des Unterteils eines zwei- oder mehrteiligen Behälters, insbesondere Wirbelschichtbehälters, auf Tellerfederpaketen erfolgt. Im Falle einer Explosion sind diese in der Lage, Verformungen aufzunehmen und die entsprechenden Kräfte aufzufangen. Ebenfalls gehört zum Stand der Technik, die entsprechenden Behälter von vornherein so auszulegen, dass sowohl im Normalzustand wie auch nach einer Explosion eine kraftschlüssige Verbindung zwischen den Behälterteilen vorliegt - beispielsweise über Verschraubung von ringförmigen Flanschen an den Teilen). Nachteilig ist der hohe konstruktive Aufwand und wegen der Tellerfedern insbesondere der hohe Aufwand zur Montage und Justierung.

Es besteht demgemäß die Aufgabe, diese Nachteile zu vermeiden und vorteilhafte neue Behältertypen, die einem erhöhten Innendruck, wie Explosionsdruck, standhalten können, zur Verfügung zu stellen.

Diese Aufgabe wird gemäß der vorliegenden Erfindung dadurch gelöst, daß die beiden Gehäuseteile des Behälters, insbesondere eines Wirbelschichtbehälters, durch im Trennbereich formschlüssig ineinandergreifende Kupplungsteile verbunden sind, die eine in Trennrichtung begrenzte Bewegung zulassen, die Behälterteile durch eine Halterung mit einer Solltrennstelle in Dichtstellung gehalten sind, in der ein elastisches Dichtelement an den beiden Kupplungsteilen dichtend anliegt und die Kupplungsteile bei Überschreiten eines maximalen Behälterinnendrucks, Ansprechen der Solltrennstelle und Verschieben der Gehäuseteile in Trennrichtung eine Anschlagbegrenzung bilden.

Kommt es in einem derartigen Behälter zu einer Erhöhung des Innendruckes, insbesondere durch Explosion, so findet kein Entweichen nach aussen statt - vielmehr bewirkt das Aufeinandertreffen der Kupplungsteile an der Anschlagbegrenzung eine mit steigendem Druck zunehmende druckbeständige Abdichtung des Kupplungsbereichs zwischen Ober- und Unterteil des Behälters, die eine deutlich bessere Abdichtung gewährleistet als das elastische Dichtelement im Normalzustand. Durch die Relativbewegung der Teile zueinander wird an der Solltrennstelle die Verbindung zur Halterung des damit verbundenen Teils des Behälters getrennt, und die Relativbewegung erlaubt eine Vergrösserung des Behälters, ohne dass ein Entweichen von Inhalten des Behälters stattfindet. Komplizierte Justierung und Montage wie bei Tellerfederlagerung entfallen und die Verformung der Behälterwände wird vermindert bzw. findet (insbesondere bei Verwendung von Duplexstahl, siehe unten) gar nicht statt.

Vorzugsweise ist vorgesehen, daß als Kupplungsteile an einem Behälterteil eine im Querschnitt U-förmige, mit ihrer offenen Seite nach innen gerichtete Fangzarge und am anderen Behälterteil ein nach außen gerichteter, in die Fangzarge eingreifender Ringflansch vorgesehen sind, daß der Ringflansch zwischen das in der Fangzarge befindliche Dichtelement und dem freien Seitenflansch der Fangzarge eingreift und daß die Innenseite des freien Seitenflansches der Fangzarge und die ihr zugewandte Seite des Ringflansches Anschlagflächen bilden, die in Betriebsstellung zueinander beabstandet sind. Dies ist eine konstruktiv einfache Verwirklichung des allgemeinen Prinzips der Erfindung.

Zweckmäßigerweise sind das Gehäuseoberteil starr mit der Halterung und das Gehäuseunterteil über die vorzugsweise durch ein oder mehrere, die Solltrennstelle bildende, insbesondere als Scherelemente vorliegende Verbindungselemente mit der Halterung verbunden. Die Kombination aus starrer Halterung des Oberteils und abscherbarer Halterung des Unterteils ermöglicht im Explosionsfalle die Lagestabilität des Behälters, zugleich jedoch eine Relativbewegung der Teile zueinander, die einen Teil des Explosionsdruckes auffängt.

Nach einer Ausführungsform der Erfindung ist vorgesehen, daß die Scherelemente Bolzen, insbesondere Scherstifte sind. Dies ermöglicht eine besonders einfache Montage.

Vorzugsweise ist das Dichtelement als aufweitbare, insbesondere aufblasbare Hohldichtung ausgebildet. Durch die Aufweitbarkeit wird die Montage weiter erleichtert. Das Ober- und Unterteil können miteinander ohne Zusammenpressen verbunden werden und durch die Aufweitung wird der für die Abdichtung insbesondere im Normalbetrieb nötige Anpressdruck zwischen den Behälterteilen erreicht.

Ein erfindungsgemäßer Behälter kann im wesentlichen (ausser beispielsweise Fensterglas in Fensterluken) aus einem üblichen Stahl, z.B. aus einem austenitischen Stahl, wie V2A- oder V4A, z.B. mit der Werkstoffnummer 1.4301, 1.4571, 1.4404 oder 1.4435.

Eine besonders bevorzugte Ausführungsform der Erfindung sieht jedoch vor, daß mindestens das Gehäuseunterteil, vorzugsweise Ober- und Unterteil, aus Duplexstahl ausgebildet sind. Überraschenderweise ist dieses Material trotz seiner höheren Sprödigkeit ausgezeichnet geeignet, um den Anforderungen für die erfindungsgemäßen Behältern gerecht zu werden. Generell bezieht sich die Anmeldung auch auf die Verwendung von Duplexstahl zur Herstellung von Wirbelschichtbehältern bzw. allgemein auf die Wirbelschichtbehälter als solche aus Duplexstahl, unabhängig von der Art der Verbindung von Ober- und Unterteil, was die unten genannten Vorzüge hat. Bevorzugt sind Wirbelschichtbehälter aus den unten als bevorzugt angegebenen Duplexstählen, insbesondere den in den Beispielen genannten.

An dieser Stelle sei angemerkt, daß jedes Gehäuseteil ausser der Wand durchaus andere Bestandteile aufweisen kann, beispielsweise Zu- und Abgänge oder auch Sichtluken, die nicht notwendigerweise aus den genannten Materialien bestehen müssen. "Aus Duplexstahl bestehend" bedeutet also praktisch "im wesentlichen aus Duplexstahl bestehend", d.h. dass die Wände und ggf. die Kupplungselemente aus Duplexstahl bestehen. Wegen ihres relativ kleinen Durchmessers sind Ausgänge und Luken bei erhöhten Innendrucken, wie Explosionen, weniger gefährdet und so ausreichend durch konstruktive Maßnahmen kontrollierbar.

Die Ausführung aus Duplexstahl hat gegenüber Ausführungsformen mit anderen Stählen insbesondere den Vorteil, dass eine enorme Gewichtsreduktion möglich ist, ohne daß an Stabilität eingebüsst wird: Ein typischer Wirbelschichtbehälter für z.B. eine im Pharmabereich übliche Menge von 120 kg zu bearbeitendem Stoff aus herkömmlichen Stählen, wie V2A-Stahl, V4A-Stahl oder Chrom-Nickelstählen, z.B. die Stähle mit der deutschen Werkstoff-Nummer 1.4571, 1.4404 oder 1.4435, wiegt aufgrund der benötigten Wanddicken rund 2 500 bis 3000 kg. Wird hingegen erfindungsgemäß Duplexstahl verwendet, so reichen bei ansonsten identischer Ausstattung der Behälter 1 750 kg Gewicht aus, was hauptsächlich durch eine geringere Wanddicke erreicht wird. Dies ist eine Gewichtsreduktion um rund ein Drittel. Dennoch liegen ausreichende Zugfestigkeit, eine hohe Streckfestigkeit, eine geeignete Dehngrenze und eine gut ausreichende Bruchfestigkeit, ferner spanabhebende Bearbeitbarkeit und Schweissbarkeit vor, was die Herstellung der betreffenden Behälter erleichtert.

Die Gewichtsreduktion durch die Verwendung von Duplexstahl erleichtert, über die oben genannten Vorteile hinaus, den Transport der Behälter und vereinfacht die Einhaltung statischer Voraussetzungen bei ihrem Aufstellen, da durch die erfindungsgemäße Verwendung von Duplexstahl eine geringere Bodenbelastung resultiert. Da Wirbelschichttrocknungs-, Granulations- und Coatingprozesse insbesondere in moderneren pharmazeutischen Produktionsstätten mit vertikalen Produktionskonzepten innerhalb eines Gebäudes, wenn möglich, auf einer der oberen Gebäudeebenen stattfinden sollten, ist diese geringe Bodenbelastung besonders vorteilhaft. So sind beispielsweise auch Nachrüstungen von Wirbelschichtanlagen aus Duplexstählen in bereits bestehende Gebäude mit vorhandenen, nicht besonders verstärkten Industrieböden, die üblicherweise eine statische Flächenbelastung von rund 1 000 kg/m² zulassen, möglich, ohne dass eine Verstärkung des Bodens am Aufstellungsort erforderlich wird.

Bevorzugt ist ein Behälter, bei dem das Gehäuseoberteil und/oder Unterteil und vorzugsweise auch die Scherelemente und/oder die Halterung aus Duplexstahl bestehen.

Die einzelnen vor- und nachstehenden Begriffe haben im Rahmen der vorliegenden Anmeldung vorzugsweise die nachstehend genannten Bedeutungen, sofern nicht anders angegeben:

Behälter sind insbesondere Reaktoren oder insbesondere Wirbelschichtbehälter, wie sie beispielsweise in Anlagen der pharmazeutischen Industrie, der Nahrungsmittel- oder der Agroindustrie Verwendung finden.

Ein Gehäuseoberteil kann ein- oder mehrteilig sein (beispielsweise im Falle eines Wirbelschichtbehälters, von unten nach oben, Expansionskammer und eine Filterkammer umfassen). Die Kupplung zwischen den einzelnen Bestandteilen eines mehrteiligen Oberteils kann nach Standardmethoden erfolgen (beispielsweise Verschrauben von ringförmig auf der Aussenseite angeordneten Flanschen) oder durch Verwendung einer erfindungsgemäßen Kupplung.

Unter Gehäuseunterteil ist vorzugsweise ein Materialbehälter (auch als Ladungsschale bezeichnet) eines Reaktors oder insbesondere eines Wirbelschichttrockners zu verstehen.

Es bedarf keiner weiteren Erläuterung, dass die Begriffe "Oberteil" und "Unterteil" nicht zwangsläufig bedeuten, dass der betreffende Behälter bei der Benutzung senkrecht stehen muss - er kann auch liegen oder in einem beliebigen Winkel angeordnet sein, so dass die Begriffe "Ober-" und "Unterteil" sich lediglich auf die relative Lage der Teile beziehen. Die annähernd oder insbesondere vollständig senkrechte Position des Behälters bildet jedoch eine bevorzugte Ausführungsform der Erfindung, insbesondere bei erfindungsgemäßen Wirbelschichtbehältern.

Ringförmig bedeutet insbesondere mit im wesentlichen rundem Querschnitt, insbesondere kreisförmig, kann aber ferner auch für von der Kreisform abweichende Querschnittsformen (Oval, Ellipse, Mehreck) stehen.

Die Abdichtung ist insbesondere eine solche, welche während des Normalbetriebs (ohne starken Überdruck im Behälter) Dichtigkeit nach außen gewährleistet.

Formschlüssig verbunden bedeutet nicht, dass die ineinandergreifenden Kupplungsteile alleine gesehen spielfrei miteinander verbunden sind, also auch nicht, daß sie im Normalbetrieb schon alleine eine Abdichtung gewährleisten. Vielmehr ist die Kupplung insbesondere so vorzunehmen, dass Ober- und Unterteil sowohl radial als auch vor allem (bezogen auf die Längsachse des Behälters, die Ober- und Unterteil durchläuft) annähernd axial (letzteres ist die bevorzugte Bedeutung von "in Trennrichtung") um insbesondere ein oder mehrere Millimeter, insbesondere 2 bis 20 mm, vorzugsweise 5 bis 7 mm gegeneinander beweglich sein können. Dies ermöglicht (bei steigendem Druck, wie im Falle einer Explosion innerhalb des Behälters) eine Bewegung "in Trennrichtung".

Als Kupplungsteile kommen vorzugsweise Kombinationen aus Flanschen und sie umgreifenden Fangzargen in Betracht; bevorzugt sind insbesondere eine an einem Behälterteil (vorzugsweise am Unterteil) vorliegende im Querschnitt U-förmige, mit ihrer offenen Seite nach innen gerichtete Fangzarge und ein am anderen Behälterteil (vorzugsweise dem Oberteil) vorliegender nach außen gerichteter, in die Fangzarge eingreifender Ringflansch. Der Ringflansch greift insbesondere zwischen einem in der Fangzarge befindlichen Dichtelement und dem freien Seitenflansch der Fangzarge ein. Die Innenseite des freien Seitenflansches der Fangzarge und die ihr zugewandte Seite des Ringflansches bilden Anschlagflächen, die in Betriebsstellung zueinander beabstandet sind. Die Anschlagflächen am freien Seitenflansch und am Ringflansch müssen nicht senkrecht zur Längsachse des Behälters stehen, können also auch in einem anderen Winkel als 90 ° zur Behälterwand stehen, liegen jedoch vorzugsweise in einem Winkel von ungefähr 90 ° zur Behälterwand, und liegen vorzugsweise parallel zueinander, um möglichst guten Formschluss zu ermöglichen.

Erfolgt bei Erhöhung des Innendruckes (insbesondere Explosion) eine relative Bewegung des Ober- und Unterteils zueinander, so bewirken bei einem Druck, der genügend stark ist, die beiden Teile in Trennrichtung zu bewegen, die beiden Anschlagflächen (durch Formschluss) eine Abdichtung, die umso stärker wirkt, je stärker der Innendruck ist.

Unter einer Halterung versteht man eine mindestens ein, vorzugsweise zwei Stützelemente, umfassende Haltevorrichtung, wobei bevorzugt ist, dass das oder die Stützelemente (vorzugsweise mit dem obersten Teil des Oberteils des Behälters) starr im Kraftschluss oder Stoffschluss verbunden sind und so die Standfestigkeit des gesamten Behälters gesichert ist, auch im Falle einer Explosion.

Eine Halterung mit Solltrennstelle ist insbesondere eine solche, die an einem Teil des Behälters, der mit einem benachbarten Teil durch eine erfindungsgemäße Verbindung mit im Trennbereich formschlüssig ineinandergreifenden Kupplungsteilen verbunden ist, vorgesehen ist und diesen mit der Halterung verbindet. Bevorzugt ist eine Verbindung zwischen Halterung und dem Behälterteil über Scherelemente. Im Fall eines erhöhten Innendruckes, wie bei einer Explosion im Behälter, bewegt sich das Behälterteil, das über die Solltrennstelle, insbesondere Scherelemente, mit der Halterung verbunden ist, und bewirkt eine Trennung von der Halterung, insbesondere im Fall von Scherelementen durch Abscheren, und kann sich so in Trennrichtung der Behälterteile bewegen, bis diese durch die Kupplungsteile am weiteren Bewegen in Trennrichtung gehindert werden. Mindestens einer (insbesondere der untere, ferner der obere) der Teile des Behälters muss auf diese Weise über Solltrennstellen mit der Halterung verbunden sein.

Als Scherelement kommen insbesondere Laschen oder (schraub- oder steckbare) Bolzen, insbesondere Scherstifte, in Betracht. Diese bestehen vorzugsweise aus üblichen Materialien, insbesondere Metallen oder Legierungen, vorzugsweise aus Stahl, in einer Ausführungsvariante aus Duplexstahl, jedoch in erster Linie aus weicheren Metallen oder Legierungen, insbesondere aus weicheren Stählen, wie Standardstahlwerkstoffen A2 (z.B. 1.4301, 1.4303 oder 1.4306).

In Dichtstellung gehalten bedeutet insbesondere, dass die Halterung die Behälterteile bei Betrieb des Behälters mit ausreichendem Druck gegeneinander drückt, um im Normalbetrieb ihre Position relativ zueinander im wesentlichen zu erhalten und die Abdichtung zu bewirken. Der hierfür benötigte Druck ist abhängig von der Dichtungslänge und dem nötigen Dichtungsdruck und damit der Behältergrösse.

Dies kann erreicht werden, indem man die Teile beispielsweise hydraulisch gegeneinander drückt, oder vorzugsweise, indem man (alternativ oder zusätzlich) das elastische Dichtelement zwischen den Teilen so ausbildet, dass es einen ausreichenden Druck zwischen den Teilen erzeugbar macht, der es gegen die beiden Teile presst und sie so mit ausreichendem Druck verbindet.

Bei dem elastischen Dichtelement kann es sich vorzugsweise um einen elastischen Ring aus Kunststoff oder Gummi, insbesondere aus Silicon handeln. Dieses kann innen hohl sein (Hohldichtung) und mit einem Gas, wie Luft, Kohlendioxid oder Stickstoff, gefüllt werden (bzw. im Betriebszustand gefüllt sein). "Hohldichtung bedeutet insbesondere, daß die Dichtung in sich geschlossen (schlauchförmig) ist, sie kann aber auch an einer Seite offen und dann nur durch Kontakt mit dem anliegenden Material des Oberoder Unterteils (beispielsweise Teilen der Kupplung) einen luftdichten Hohlraum bilden. Eine derartige Hohldichtung umfasst auch ein oder mehrere Ventile, die vorzugsweise im Einbauzustand von außen zugänglich sind.

Vorzugsweise ist das elastische Dichtelement so ausgeformt, dass es im Falle einer (beispielsweise durch eine Druckerhöhung im Inneren des Behälters hervorgerufenen) Bewegung des oberen und unteren Teils relativ zueinander in Trennrichtung dem Flansch soweit folgen kann, dass während des Übergangs zur Abdichtung durch den entstehenden Kontakt der Anschlagflächen der Kupplungsteile noch eine dichte Verbindung erhalten bleibt (Aufwölbung).

Besonders bevorzugt als Dichtelement ist ein aufweitbarer, insbesondere ein aufblasbarer und schlauchförmiger, Dichtungsring, insbesondere eine Hohldichtung (mit einer, gewünschtenfalls mit mehreren Luftkammern) aus elastischem Material, insbesondere einem Kunststoff oder Gummi, vor allem Silikon, wobei eine ausreichende Wanddicke vorliegt, beispielsweise einige Millimeter, z.B. 4 bis 7 mm. Dieser aufweitbare Dichtungsring ermöglicht, ohne dass das Ober- und Unterteil bei der Montage des Behälters durch Anpressen (beispielsweisehydraulisch)gegeneinandergepresstwerdenmüssen, erst nach der Befestigung des Ober- und Unterteils an der Halterung den dem gewünschten Gewicht entsprechenden Anpressdruck, mit dem die Teile gegeneinander gepresst werden, durch Aufweiten, insbesondere pneumatisch (durch Aufblasen), aufzubauen. Bevorzugte Aufblasdrucke liegen bei 3 bis 15 bar, insbesondere zwischen 3 und 12 bar.

Ein derartiges Dichtelement vermag ohne weiteres den Druck bei normalem Betrieb zu verkraften, würde jedoch dem Druck, der notwendig ist, um Ober- und Unterteil auch im Falle einer Explosion im Behälter zusammenzuhalten, nicht gewachsen sein.

Vorzugsweise ist das elastische Dichtelement so angeordnet, daß es einen minimalen Spalt zwischen dem Kupplungsteil des oberen und dem des unteren Teils belässt, in einer oben beschriebenen bevorzugten Form der Erfindung mit Ringflansch und Fangzarge als Kupplungselementen zwischen dem festen Flansch einer Fangzarge an dem einen und dem Ringflansch am anderen Element. Dieser Spalt kann im Bereich von wenigen Millimetern, vorzugsweise 1 mm oder weniger, breit sein.

Das elastische Dichtelement dagegen steht vorzugsweise im Normalbetrieb in direktem Kontakt mit den beiden Flanschen (= dichtendes Anliegen).

Überschreiten eines maximalen Behälterinnendruckes liegt beispielsweise vor, wenn im Behälter ein Innendruck von mehr als zwei bar, insbesondere von 5 oder mehr bar, vor allem 10 oder mehr bar, beispielsweise von 10 bis 15, vor allem von 10 bis 12 bar, entsteht, etwa durch Explosion im Inneren.

In diesem Falle bewegen sich das Ober- und das Unterteil in Trennrichtung zueinander, bis sie an die Anschlagbegrenzung, die von den Kupplungsteilen gebildet wird, gelangen.

Gleichzeitig wird durch die Bewegung des damit verbundenen Behälterteils an der Solltrennstelle dessen Verbindung mit der Halterung verschoben, insbesondere im Falle eines Scherelementes abgeschert.

Diese Kombination aus Verschiebung der Verbindung von Solltrennstelle und Bewegung der Kupplungsteile bis zur Anschlagsbegrenzung nimmt einen Teil der Explosionsenergie auf und sorgt außerdem für eine durch den Kontakt an den Anschlagsflächen sich mit wachsendem Druck selbst verstärkende Dichtung. Beides zusammen ermöglicht, Behälter zu konstruieren, die den eingangs erläuterten Anforderungen bezüglich Explosionsstabilität gewachsen sind.

Duplexstahl ist ein Stahl, der sowohl ferritisch als auch austenitisch ist. Bevorzugt ist ein Duplexstahl, der in Gewichtsanteilen 4,5 bis 6,5 % Nickel, 21 bis 25 % Chrom, 0,3 bis 3,5 % Molybdän, nicht mehr als 0,03 % Kohlenstoff, 0,08 bis 0,20 % Stickstoff und, neben möglichen Spuren üblicher Verunreinigungen, als Differenz zu 100 % Eisen enthält.

"Spuren" bedeutet, daß insbesondere weniger als 0,1 %, vorzugsweise weniger als 0,02 % an Verunreinigungen vorliegen.

Besonders bevorzugt ist ein Duplexstahl, der in Gewichtsanteilen 4,5 bis 6,5 % Nickel, 21 bis 23 % Chrom, 2,5 bis 3,5 % Molybdän, nicht mehr als 0,03 % Kohlenstoff, 0,08 bis 0,20 % Stickstoff und, neben möglichen Spuren von üblichen Verunreinigungen, als Differenz zu 100 % Eisen enthält.

Die obigen Begriffe können bei der vor- und nachstehenden Beschreibung der Erfindungsgegenstände einzeln, teilweise oder alle zusammen durch die entsprechenden spezifischeren Definitionen ersetzt werden, was dann zu bevorzugten Ausführungsformen der Erfindung führt.

Das nachfolgende Beispiel dient der Illustration der Erfindung, ohne ihren Umfang einschränken zu sollen:

Nachstehend ist die Erfindung mit ihren wesentlichen Einzelheiten anhand der Zeichnungen noch näher erläutert.

Es zeigt:
- Fig.1: einen Querschnitt eines (hier als Wirbelschichtbehälter ausgeführten) Behälters (1),
- Fig.2: einen Querschnitt des Kupplungsbereichs im Normalbetriebszustand und
- Fig.3: einen Querschnitt des Kupplungsbereichs nach einer Erhöhung des Innendrucks, beispielsweise nach einer Explosion.

### Beispiel:

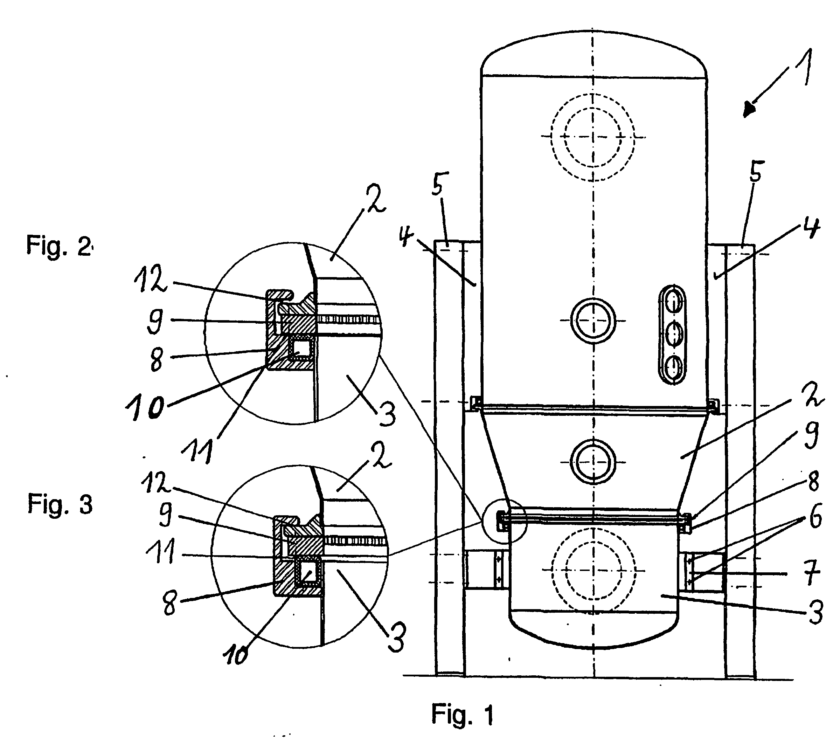

Fig.1 zeigt eine Teilansicht eines (hier als Wirbelschichtbehälter ausgeführten) Behälters 1, hier aus Duplexstahl der deutschen Werkstoffnummer 1.4462 (alternativ könnte er auch aus Stahl der Werkstoffnummern 1.4362, 1.4418, 1.4460 oder 1.4410 oder anderen Stählen bestehen), mit einem hier zweiteilig ausgeführten Oberteil 2, das über die Befestigungselemente 4 mit einer Halterung 5 starr verbunden ist, und einem Unterteil 3, das über die hier als Scherstifte vorliegenden Scherelemente 6 als Solltrennstellen 7 mit der Halterung 5 verbunden ist.

Ober- und Unterteil (und im vorliegenden Fall auch die beiden Teile des Oberteils) sind mittels der in Fig. 2 und 2 im Querschnitt gezeigten Kupplungselemente 8 und 9, hier als Fangzarge 8 und als Ringflansch 9 ausgebildet.

Fig.2 zeigt einen Ausschnitt des Kupplungsbereichs 8, 9 im Querschnitt im normalen betriebsfähigen oder Betriebs-Zustand (ohne erhöhten Innendruck): Das hier als Hohldichtung ausgebildete Dichtelement 10 zum Beispiel aus Silikon, dichtet den Innenraum vom Spalt 11 so ab, dass im Normalbetrieb Dichtigkeit gewährleistet ist. Die Hohldichtung ist (über ein nicht gezeigtes Ventil) pneumatisch unter Druck (3 bis 15 bar) gesetzt und sorgt so dafür, dass Ober- und Unterteil gegeneinandergepresst werden. Zwischen dem freien Flansch der Fangzarge 8 und dem Ringflansch 9 ist ein Spalt 12, beispielsweise mit 5 mm Breite, vorhanden.

Fig.3 zeigt denselben Ausschnitt nach einer Erhöhung des Innendrucks, beispielsweise durch Explosion: Das Oberteil 2 und das Unterteil 3 haben sich infolge des Explosionsdrucks auseinanderbewegt. Der Spalt 11 hat sich um die Breite des ursprünglichen Spaltes 12 vergrößert, während der ursprünglich im Normalbetriebszustand vorhandene Spalt 12 durch die relative Bewegung der Fangzarge 9 und des Ringflansches 8 verschwunden ist.

Die beiden infolge des Epxplosionsdrucks aneinandergepressten Flächen des freien Flansches der Fangzarge und des Ringflansches bilden zusammen eine Halterung und Abdichtung durch Formschluss, die mit dem Druck im Behälterinneren wächst. Die Hohldichtung (10) ist hier durch ihren Innendruck und beispielsweise auch durch den seitlichen Druck aus dem Behälter so verformt, dass sie nach wie vor Dichtwirkung hat - alleine würde sie jedoch den Drücken nicht standhalten können.

Nicht gezeigt ist, dass die Scherstifte 6 nach der Explosion abgeschert sind: Das Unterteil 3 hängt somit nur noch durch die Kupplung mit dem Oberteil 2, das starr in der Halterung befestigt ist, an dem Behälteroberteil.

## Patentansprüche

1. Explosionssicherer Behälter (1), insbesondere Wirbelschichtbehälter mit einem Gehäuseoberteil (2) und einem Gehäuseunterteil (3), wobei diese Gehäuseteile in einem ringförmigen Trennbereich lösbar miteinander verbunden sind und wobei in diesem Trennbereich eine Abdichtung vorgesehen ist, **dadurch gekennzeichnet, daß** (i) die beiden Gehäuseteile durch im Trennbereich formschlüssig ineinandergreifende Kupplungsteile (8), (9) verbunden sind, die eine in Trennrichtung begrenzte Bewegung zulassen, (ii) die Behälterteile durch eine Halterung (5) mit einer Solltrennstelle (7) in Dichtstellung gehalten sind, in der ein elastisches Dichtelement (10) an den beiden Kupplungsteilen dichtend anliegt und (iii) die Kupplungsteile bei Überschreiten eines maximalen Behälterinnendrucks, Ansprechen der solltrennstelle und Verschieben der Gehäuseteile in Trennrichtung eine Anschlagbegrenzung bilden.

2. Behälter nach Anspruch 1, **dadurch gekennzeichnet, daß** als Kupplungsteile (8), (9) an einem Behälterteil eine im Querschnitt U-förmige, mit ihrer offenen Seite nach innen gerichtete Fangzarge und am anderen Behälterteil ein nach außen gerichteter, in die Fangzarge eingreifender Ringflansch vorgesehen sind; daß der Ringflansch zwischen das in der Fangzarge befindliche Dichtelement (10) und dem freien Seitenflansch der Fangzarge eingreift; und daß die Innenseite des freien seitenflansches der Fangzarge und die ihr zugewandte Seite des Ringflansches Anschlagflächen bilden, die in Betriebsstellung zueinander beabstandet sind.

3. Behälter nach Anspruch 1 oder 2, **dadurch gekennzeichnet, daß** das Gehäuseoberteil (2) starr mit der Halterung (5) und das Gehäuseunterteil (3) über die vorzugsweise durch ein oder mehrere, die Solltrennstelle (7) bildende Scherelemente (6) mit der Halterung verbunden sind.

4. Behälter nach Anspruch 3, **dadurch gekennzeichnet, daß** die Scherelemente Scherstifte sind.

5. Behälter nach einem der Ansprüche 1 bis 4, **dadurch gekennzeichnet, daß** das Dichtelement (10) als aufweitbare, insbesondere aufblasbare Hohldichtung ausgebildet ist.

6. Behälter insbesondere nach einem der Ansprüche 1 bis 5, **dadurch gekennzeichnet, daß** zumindest das Gehäuseunterteil (3) aus Duplexstahl besteht.

7. Behälter nach Anspruch 6, **dadurch gekennzeichnet, daß** sowohl das Gehäuseoberteil (2) als auch das Gehäuseunterteil (3) und gegebenenfalls die Scherelemente (6) und/oder die Halterung (4), (5) aus Duplexstahl bestehen.

8. Wirbelschichtbehälter nach Anspruch 6 oder 7, der im wesentlichem aus Duplexstahl besteht.

9. Behälter nach einem der Ansprüche 6 bis 8, **dadurch gekennzeichnet, daß** der Duplexstahl in Gewichtsanteilen 4,5 bis 6,5 % Nickel, 21 bis 25 % Chrom, 0,3 bis 3,5 % Molybdän, nicht mehr als 0,03 % Kohlenstoff, 0,08 bis 0,20 % Stickstoff und, neben möglichen Spuren üblicher Verunreinigungen, als Differenz zu 100 % Eisen enthält.

10. Behälter nach einem der Ansprüche 6 bis 9, **dadurch gekennzeichnet, daß** der Duplexstahl in Gewichtsanteilen 4,5 bis 6,5 % Nickel, 21 bis 23 % Chrom, 2,5 bis 3,5 % Molybdän, nicht mehr als 0,03 % Kohlenstoff, 0,08 bis 0,20 % Stickstoff und, neben möglichen Spuren von üblichen Verunreinigungen, als Differenz zu 100 % Eisen enthält.

## Claims

1. Explosion-proof container (1), particularly a fluidised bed container with an upper housing part (2) and a lower housing part (3), these housing parts being releasably connected to one another in an annular separating zone and a seal being provided in this separating zone, **characterised in that** (i) the two housing parts are joined together by coupling elements (8), (9) which interlockingly engage with one another in the separating zone, these coupling elements allowing a limited movement in the direction of separation, (ii) the parts of the container are held, by a holder (5) with a frangible point (7), in the sealing position in which a resilient sealing element (10) bears on the two coupling members to form a seal and (iii) the coupling elements form a limiting abutment when a maximum internal pressure in the container is exceeded, the frangible point is activated and the parts of the housing move in the direction of separation.

2. Container according to claim 1, **characterised in that** a locking frame of U-shaped cross-section with its open side directed inwardly is provided on one part of the container while on the other part of the container is provided an outwardly directed annular flange engaging in the locking frame, to form the coupling parts (8), (9); **in that** the annular flange engages between the sealing element (10) located in the locking frame and the free side flange of the locking frame; and **in that** the inside of the free side flange of the locking frame and the side of the annular flange facing it form abutment surfaces which are spaced from one another in the working position.

3. Container according to claim 1 or 2, **characterised in that** the upper part of the housing (2) is rigidly connected to the holder (5) and the lower part of the housing (3) is connected to the holder via the preferably one or more shear-off elements (6) which form the frangible point (7).

4. Container according to claim 3, **characterised in that** the shear-off elements are shear-off pins.

5. Container according to one of claims 1 to 4, **characterised in that** the sealing element (10) is constructed as an expandable, more particularly inflatable, hollow seal.

6. Container, particularly according to one of claims 1 to 5, **characterised in that** at least the lower part of the housing (3) consists of duplex steel.

7. Container according to claim 6, **characterised in that** both the upper part of the housing (2) and the lower part of the housing (3) and optionally the shear-off elements (6) and/or the holder (4), (5) consist of duplex steel.

8. Fluidised bed container according to claim 6 or 7 which consists essentially of duplex steel.

9. Container according to one of claims 6 to 8, **characterised in that** the duplex steel contains, in amounts by weight, 4.5 to 6.5% nickel, 21 to 25% chromium, 0.3 to 3.5% molybdenum, not more than 0.03% carbon, 0.08 to 0.20% nitrogen and, in addition to possible traces of conventional impurities, iron to make up the difference to 100%.

10. Container according to one of claims 6 to 9, **characterised in that** the duplex steel contains, in amounts by weight, 4.5 to 6.5% nickel, 21 to 23% chromium, 2.5 to 3.5% molybdenum, not more than 0.03% carbon, 0.08 to 0.20% nitrogen and, in addition to possible traces of conventional impurities, iron to make up the difference to 100%.

## Revendications

1. Conteneur résistant à l'explosion (1), en particulier conteneur à lit fluidisé comportant une partie supérieure de corps (2) et une partie inférieure de corps (3), dans lequel ces parties de corps sont reliées ensemble de façon amovible dans une zone de séparation annulaire et dans lequel une garniture étanche est prévue dans cette zone de séparation, **caractérisé en ce que** (i) les deux parties de corps sont reliées par des pièces de raccordement (8), (9) s'engrenant par engagement mécanique dans la zone de séparation, lesquelles autorisent un mouvement limité dans la direction de séparation, (ii) les parties de conteneur sont maintenues en position étanche par une fixation (5) comportant un point de rupture théorique ou préférentiel (7), dans laquelle un élément d'étanchéité élastique (10) repose de façon étanche au niveau des deux pièces de raccordement, et (iii) les parties de raccordement, en cas de dépassement d'une pression interne maximale du conteneur, de réaction du point de rupture théorique ou préférentiel et de déplacement ou de décalage des parties de corps, forment une limitation par butée dans la direction de séparation.

2. Conteneur selon la revendication 1, **caractérisé en ce qu'**en tant que pièces de raccordement (8), (9), on prévoit, au niveau d'une partie de conteneur une rainure d'accrochage présentant en coupe la forme d'un U et orientée par sa face ouverte vers l'intérieur, et au niveau de l'autre partie de conteneur une bride annulaire orientée vers l'extérieur et s'insérant dans la rainure d'accrochage ; **en ce que** la bride annulaire s'engrène entre l'élément d'étanchéité (10) se trouvant dans la rainure d'accrochage et la bride latérale libre de la rainure d'accrochage ; et **en ce que** la face interne de la bride latérale libre de la rainure d'accrochage et la face orientée vers celle-ci de la bride annulaire forment des surfaces d'appui qui sont espacées l'une de l'autre dans la position d'exploitation.

3. Conteneur selon la revendication 1 ou 2, **caractérisé en ce que** la partie supérieure de corps (2) est reliée de façon fixe à la fixation (5), et la partie inférieure de corps (3) est reliée à la fixation, de préférence au moyen d'un ou de plusieurs éléments de cisaillement (6), formant le point de rupture théorique ou préférentiel (7).

4. Conteneur selon la revendication 3, **caractérisé en ce que** les éléments de cisaillement sont des goujons de cisaillement.

5. Conteneur selon l'une des revendications 1 à 4, **caractérisé en ce que** l'élément d'étanchéité (10) est conçu en tant que garniture creuse extensible, en particulier gonflable.

6. Conteneur en particulier selon l'une des revendications 1 à 5, **caractérisé en ce qu'**au moins la partie inférieure de corps (3) est réalisé en acier duplex.

7. Conteneur selon la revendication 6, **caractérisé en ce que** tant la partie supérieure de corps (2) que la partie inférieure de corps (3), et éventuellement les éléments de cisaillement (6) et/ou la fixation (4), (5) sont réalisés en acier duplex.

8. Conteneur à lit fluidisé selon la revendication 6 ou 7, qui est essentiellement réalisé en acier duplex.

9. Conteneur selon l'une des revendications 6 à 8, **caractérisé en ce que** l'acier duplex contient, dans des proportions en masse, 4,5 à 6,5 % de nickel, 21 à 25 % de chrome, 0,3 à 3,5 % de molybdène, pas plus de 0,03 % de carbone, 0,08 à 0,20 % d'azote et, outre les traces éventuelles d'impuretés usuelles, de fer pour la différence à 100 %.

10. Conteneur selon l'une des revendications 6 à 9, **caractérisé en ce que** l'acier duplex contient, dans des proportions en masse, 4,5 à 6,5 % de nickel, 21 à 23 % de chrome, 2,5 à 3,5 % de molybdène, pas plus de 0,03 % de carbone, 0,08 à 0,20 % d'azote et, outre les traces éventuelles d'impuretés usuelles, de fer pour la différence à 100 %.
